# EUROPEAN PATENT APPLICATION

(11) **EP 3 321 578 A1**
(43) Date of publication of application: **16.05.2018**
(21) Application number: 15898359.3
(22) Date of filing: 30.07.2015
(51) Int. Cl.: F23B 30/00, F23B 80/02, F23B 40/04

(54) **COMBUSTOR**

(30) Priority: 10.07.2015 KR 20150098219
(71) Applicant: POSCO, Gyeongsangbuk-do 790-300 (KR)
(72) Inventor: NA, Sang-Kwon, Seoul 135-840 (KR); YOO, Young-Bong, Seoul 135-840 (KR); CHOI, Young-June, Seoul 135-840 (KR)
(74) Representative: Potter Clarkson LLP
(86) International application number: PCT/KR2015/007997
(87) International publication number: WO 2017/010598

(57) **Abstract**

A combustor according to the present invention comprises: a combustion chamber having a grate provided therein and a combustion space formed above the grate; a fuel supply part downwardly connected to the center part of the grate so as to supply fuel to an upper part of the grate; an air supply part connected to a side part of the combustion chamber so as to be slanted on a horizontal plane, thereby supplying combustion air such that combustion air swirls in the combustion space; a guide member disposed to protrude toward the inside of the combustion space from an inlet through which the combustion air flows into the combustion space, and opened downward so as to guide the combustion air such that the combustion air, provided by the air supply part, swirls downward along an inner wall of the combustion chamber in the combustion space; and protruding guide lines having a screw line shape and extended to be slanted downward on at least one of the respective surfaces, which face each other, from the guide member and the inner wall of the combustion chamber.

## Description

### [Technical Field]

The present disclosure relates to a combustor, and more particularly, to a combustor recovering combustion heat generated by burning solid fuel in a combustion chamber to use as energy.

### [Background Art]

Generally, in industrial facilities requiring industrial hot water, steam, or high temperature gas, combustors generating heat energy through igniting and burning fuel in combustion chambers are utilized to obtain thermal energy. As fuel used in such combustors, solid fuel, obtained from domestic waste, and the like, has widely been used in terms of economy and resource recycling.

However, in the course of burning solid fuel described above, ambient air, having a relatively low temperature, is simply supplied to the ignited solid fuel, so that the solid fuel may be burned. Thus, there may be a limit to increasing combustion efficiency.

Further, even though combustors are robustly manufactured, in terms of durability, the temperature inside combustion chambers may be close to 1, 000°C or higher, and thus, such high temperatures may cause the configuration of the combustion chamber, particularly, the inner walls thereof, to be damaged. Accordingly, the service life of equipment may be decreased, and it may be difficult to continuously operate combustors due to the requirement of replacement of damaged parts thereof.

### [Disclosure]

### [Technical Problem]

An aspect of the present disclosure is to provide a combustor that may preheat a combustion gas and cool an inner wall of a combustion chamber.

### [Technical Solution]

According to an aspect of the present disclosure, a combustor may include: a combustion chamber including a grate embedded therein and a combustion space formed above the grate; a fuel supply portion downwardly connected to a central portion of the grate to supply fuel to an upper portion of the grate; an air supply part connected to a side portion of the combustion chamber so as to be slanted on a horizontal plane, and supplying combustion air such that the combustion air may rotate in the combustion space; a guide member disposed to protrude toward an inside of the combustion space from an inlet through which the combustion air may flow into the combustion space, and opened downwardly so as to guide the combustion air such that the combustion air, supplied by the air supply part, may rotate downwardly along an inner wall of the combustion chamber in the combustion space; and protruding guide lines having a screw line shape and extending to be slanted downwardly on at least one of respective surfaces, which may face each other, of the guide member and the inner wall of the combustion chamber.

Lengths of the respective protruding guide lines protruding laterally may be reduced downwardly in a longitudinal direction thereof.

The protruding guide lines may be formed on a surface of the guide member that may face the inner wall of the combustion chamber, and may protrude to be slanted downwardly toward the inner wall of the combustion chamber.

Downwardly slanted angles of the respective protruding guide lines, with respect to the inner wall of the combustion chamber, may be greater downwardly in a longitudinal direction thereof.

The guide member may be disposed such that a gap between respective surfaces of the guide member and the inner wall of the combustion chamber that may face each other may narrow in a longitudinal direction of the guide member in a position of the inlet of the combustion space, in order to increase a flow velocity of guided combustion air.

The guide member may include: an upper guide plate extending from an upper structure of the inlet in the combustion chamber, inwardly of the combustion chamber; and a side guide plate extending downwardly from the upper guide plate and spaced apart from the inner wall of the combustion chamber.

The air supply part may include: an upper air supply portion connected to an upper side portion of the combustion chamber to supply the combustion air such that the combustion air may rotate downwardly in the combustion space; and a lower air supply portion connected to a lower side portion of the combustion chamber to supply the combustion air such that the combustion air may be in contact with the fuel on an upper portion of the grate to be burned and then rise along a central portion of the combustion chamber.

The upper air supply portion may supply 1.5 times to 4 times as much combustion air amount per hour as the lower air supply portion.

The air supply part may be connected to an outer wall of the combustion chamber, spaced apart from the inner wall while surrounding the inner wall, such that the combustion air may rotate along an external surface of the inner wall of the combustion chamber, and may then be introduced into the combustion space through the inlet.

The grate may be rotationally driven around the fuel supply portion.

The fuel supply portion may pass through the grate to protrude into the combustion space, and may be configured to have a screw form to continuously supply the fuel.

The fuel supply portion may pass through the grate to protrude into the combustion space, and may be provided with a blocking member, having a downwardly enlarged diameter and mounted on an end portion of the fuel supply portion, adjacent to the combustion space, to distribute the fuel laterally while blocking an upward movement of the fuel.

The combustion chamber may have a frustoconical shape, in which an upper portion may be relatively narrow and a lower portion may be relatively wide.

### [Advantageous Effects]

According to an exemplary embodiment in the present disclosure, a guide member and protruding guide lines may be configured so as to guide combustion air such that the combustion air supplied to an inside of a combustion chamber may rotate downwardly along an inner wall of the combustion chamber. Thus, the combustion air may be preheated before the combustion air is burned with fuel, thereby increasing the combustion efficiency. Further, the inner wall of the combustion chamber, maintained at high temperatures, may be cooled, thereby enabling continuous operation of the combustor while increasing durability and service life of the combustion chamber.

### [Description of Drawings]

FIG. 1 is a view illustrating an interior of a combustor, according to an exemplary embodiment in the present disclosure;
FIG. 2 is a view illustrating an interior of a combustor, according to another exemplary embodiment in the present disclosure;
FIG. 3 is a plan view illustrating an upper air supply portion connected to an outer wall of the combustor of FIG. 1 or 2;
FIG. 4 is a view illustrating a guide member and protruding guide lines of the combustor of FIG. 1 or 2;
FIG. 5 is a view illustrating another exemplary embodiment of the protruding guide lines of FIG. 4;
FIG. 6 is a view illustrating another exemplary embodiment of the protruding guide lines of FIG. 4; and
FIG. 7 is a view illustrating states of flames according to a difference between the amounts of combustion air per hour introduced through an upper air supply portion and a lower air supply portion in a combustor, according to an exemplary embodiment in the present disclosure.

### [Best Mode for Invention]

Hereinafter, exemplary embodiments of the present disclosure will be described with reference to the accompanying drawings. In adding reference numerals to constituent elements of respective drawings, the same constituent elements are denoted by the same reference numerals even in the case in which they are shown in different drawings. In the following description of the present disclosure, a detailed description of functions and configurations below, known in the art, will be omitted in the case in which the subject matter of the invention is rather unclear. The disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

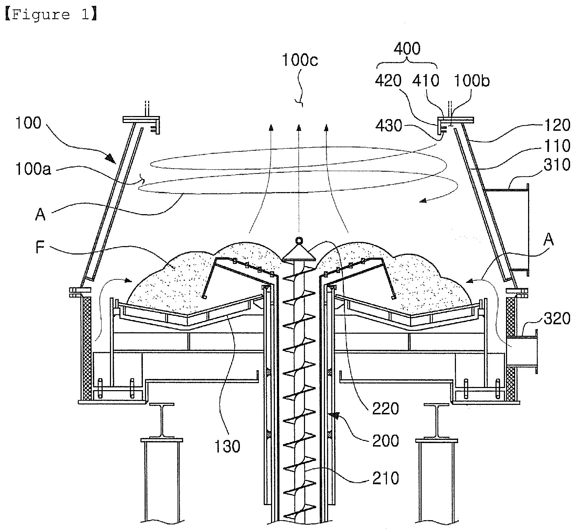

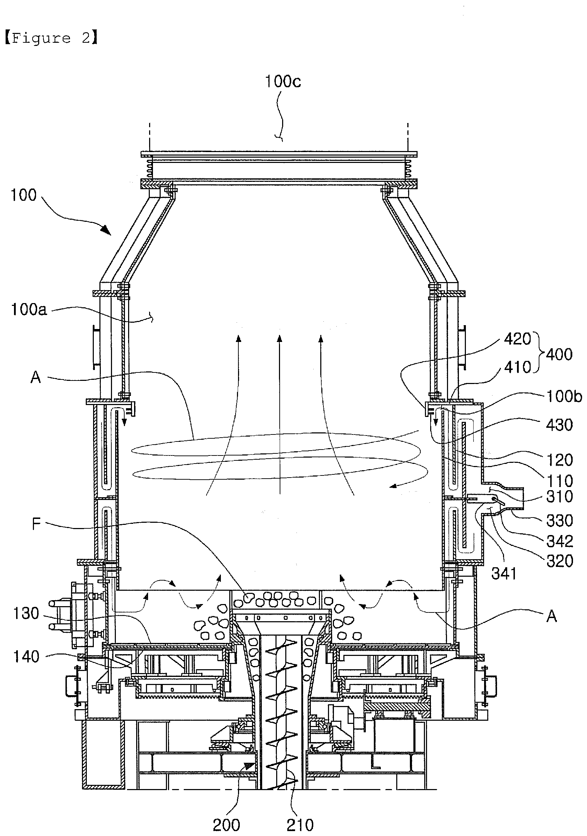

FIG. 1 is a view illustrating an interior of a combustor according to an exemplary embodiment, and FIG. 2 is a view illustrating an interior of a combustor according to another exemplary embodiment.

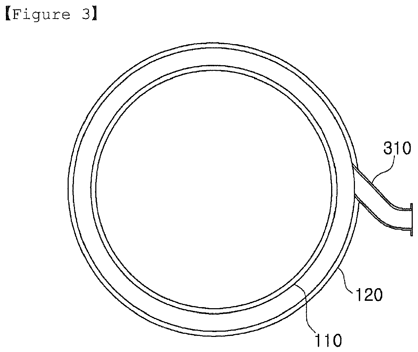

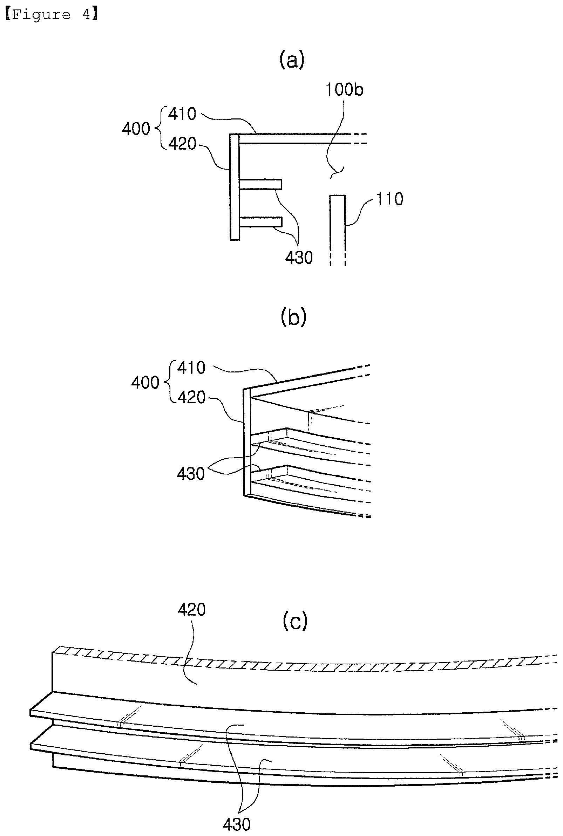

FIG. 3 is a plan view illustrating an upper air supply portion connected to an outer wall of the combustor of FIG. 1 or 2. FIG. 4 is a view illustrating a guide member and protruding guide lines of the combustor of FIG. 1 or 2.

Referring to the drawings, a combustor, according to an exemplary embodiment, may include a combustion chamber 100 in which a solid-type fuel F may be burned, a fuel supply portion 200 supplying the fuel F to the combustion chamber 100, and an air supply part supplying combustion air A to the combustion chamber 100, and as main constructive characteristics, may include a guide member 400 and protruding guide lines 430 guiding the combustion air A supplied by the air supply part.

Here, a combustion space 100a may be formed in the combustion chamber 100, a grate 130 may be installed in a lower portion of the combustion space 100a, and an outlet 100c may be formed in an upper portion thereof. In this case, the grate 130 may be configured to have the fuel F seated thereon and to have the fuel supply portion 200 downwardly connected to a central portion of the grate 130.

For example, the combustion chamber 100 may have a frustoconical shape, in which an upper portion is relatively narrow and a lower portion is relatively wide, which may be selected as a stable structure including a downward-rotating flow of the combustion air A supplied to an inside of the combustion chamber 100 to be described below, in terms of durability. In addition, this stable structure may be an efficient structure in which an unnecessary inner corner space in an angled section is removed in terms of a gas flow path.

The grate 130 may be rotatably driven around the fuel supply portion 200. As an example, the grate 130 may be directly connected to a driving member to be rotatably driven. As another example, the grate 130 may be installed on an upper surface of a turntable 140 (see FIG. 2), and when a driving member rotates the turntable 140, the grate may rotate in conjunction therewith. In this case, the direct connection structure of the driving member connected to the grate and the connection structure through the turntable 140 may also be replaced by any structure of the related art.

In addition, the fuel supply portion 200 may be downwardly connected to the central portion of the grate 130 to have a structure of supplying the fuel F to the upper portion of the grate 130. As an example, the fuel supply portion 200 may pass through the grate 130 to protrude into the combustion space 100a, and may be configured to have a screw form such that the fuel F may be continuously supplied by a screw 210.

In addition, a blocking member 220 having a downwardly enlarged diameter may be mounted on an end portion of the fuel supply portion 200, adjacent to the combustion space 110a, to distribute the fuel F laterally, while blocking an upward movement of the fuel F.

On the other hand, the air supply part may be connected to a side of the combustion chamber 100 to supply the combustion air A to an inside of the combustion chamber 100, and in detail, may include an upper air supply portion 310 and a lower air supply portion 320. The upper air supply portion 310 and the lower air supply portion 320 may be defined by a relative positional difference therebetween, and specific connection positions thereof connected to the side of the combustion chamber 100 are not particularly limited.

In this case, the upper air supply portion 310 and the lower air supply portion 320 may be configured to be able to have a structure in which the combustion air A may be supplied to rotate along an inner wall 110 of the combustion chamber 100. As an example, as illustrated in FIG. 3, the upper air supply portion 310 may be connected to the side of the combustion chamber 100, to be slanted on a horizontal plane. As the combustion air A supplied through the upper air supply portion 310 may descend while rotating along the inner wall 110 of the combustion chamber 100 in the combustion space 100a, the combustion air A may be preheated before reaching the fuel F on the grate 130, thereby increasing combustion efficiency, and may block the inner wall 110 from a high-temperature distribution portion extending upwardly from a central portion of the combustion chamber 100 toward the outlet 100c, thereby lowering a temperature of the inner wall 110 of the combustion chamber 100.

The lower air supply portion 320 may be connected to a lower side portion of the combustion chamber 100 to supply the combustion air A, such that the combustion air A may contact the fuel F on the upper portion of the grate 130 to be burned and then rise along the central portion of the combustion chamber 100.

In addition, the upper air supply portion 310 of the air supply part may be connected to an outer wall 120 of the combustion chamber 100, spaced apart from the inner wall 110 while surrounding the inner wall 110, such that the combustion air A may rotate along an external surface of the inner wall 110 of the combustion chamber 100 and may then be introduced into the combustion space 100a through an inlet 100b.

Thus, the combustion air A, supplied through the upper air supply portion 310, may cool the inner wall 110 while rotating upwardly along the external surface of the inner wall 110 of the combustion chamber 100, and may then be introduced into the combustion space 100a through the inlet 100b, to be preheated while rotating downwardly.

In addition, as an example, as illustrated in FIG. 2, the combustion air A supplied through the lower air supply portion 320 may cool a lower portion of the inner wall 110, while rotating downwardly along the external surface of the lower portion of the inner wall 110 of the combustion chamber 100, before being introduced into a lower side portion of the combustion space 100a.

The combustor, according to an exemplary embodiment, may further include, as the main constructive characteristics, the guide member 400 guiding the combustion air A supplied by the air supply part such that the combustion air A may rotate downwardly inside the combustion chamber 100, and the protruding guide lines 430 enabling the downward rotation of the combustion air A, more efficiently, together with the guide member 400, in order to cool the inner wall 110 of the combustion chamber 100 while preheating the combustion air A.

Here, as illustrated in the drawings, a rotating flow structure of the combustion air A supplied to the combustion space 100a through the upper air supply portion 310 of the air supply part will be described below in detail.

In detail, describing the upper air supply portion 310 as an example, as the upper air supply portion 310 may be connected to the side of the combustion chamber 100, to be slanted on the horizontal plane, the combustion air A may have a rotational force when the combustion air A is introduced into the combustion space 100a through the inlet 100b. In detail, the combustion air A may pass through the outer wall 120 and the inner wall 110 of the combustion chamber 100, and may then be introduced into the combustion space 100a through the inlet 100b. Even when the combustion air A is introduced into the combustion space 100a after the flow of the combustion air A as described above, the rotational force of the combustion air A may also be maintained.

The combustion air A, having the maintained rotational force, even in the combustion space 100a, as described above, may be pushed by continuously introduced subsequent combustion air, and a portion of the combustion air may rotate while descending, but the remainder of the combustion air A may be intaken by a high-temperature combustion gas reacting with and burned by the fuel F and flowing upwardly toward the outlet 100c, and thus may be moved to the central portion or an upper portion of the combustion chamber 100.

Thus, according to an exemplary embodiment, the guide member 400 may be configured to guide the combustion air A, such that the combustion air A having the maintained rotational force may rotate downwardly along the inner wall 110 of the combustion chamber 100 in the combustion space 100a, without moving toward the central portion or the upper portion of the combustion chamber 100.

In this case, the guide member 400 may have a structure disposed to protrude from the inlet 100b, through which the combustion air A may be introduced into the combustion space 100a, inwardly of the combustion space 100a, while opening downward. In detail, the guide member 400 may include an upper guide plate 410 extending from an upper structure of the inlet 100b in the combustion chamber 100, inwardly of the combustion chamber 100, and a side guide plate 411 extending downwardly from the upper guide plate 410 and spaced apart from the inner wall 110 of the combustion chamber 100. In this case, the side guide plate 411 may be arranged to be spaced apart from the inner wall 110 of the combustion chamber 100 by an appropriate interval, and the upper guide plate 410 may have a structure extending from an upper end portion of a position of the inlet 100b of the combustion space 100a toward the side guide plate 411, in the combustion chamber 100. For example, as illustrated in the drawings, in a case in which a flange structure is present above the inner wall 110 of the combustion chamber 100, and the inlet 100b of the combustion space 100a is present between the flange structure and the inner wall 110, the flange structure may function as an upper guide plate 412.

The protruding guide lines 430 may be configured to enable the downward rotation of the combustion air A, more efficiently, together with the guide member 400.

In detail, the protruding guide lines 430 may be formed on at least one of respective surfaces, which may face each other, of the guide member 400 and the inner wall 110 of the combustion chamber 100, to have a screw line shape extending to be slanted downwardly.

As an example, as illustrated in FIG. 4, the protruding guide lines 430 may be formed on the side guide plate 420, which may be a surface of the guide member 400 facing the inner wall 110 of the combustion chamber 100, and at least one of the protruding guide lines 430 may have a structure extending to be slanted downwardly, and when a plurality of protruding guide lines 430 are provided, the protruding guide lines 430 may be spaced apart from each other in a vertical direction thereof.

The protruding guide lines 430 may form a downward-rotating flow structure of the combustion air A, more effectively, in a process in which the downward rotation of the combustion air A introduced into the combustion space 100a through the inlet 100b of the combustion space 100a may be guided by the guide member 400.

In addition, as the downward rotation of the combustion air A is guided by the protruding guide lines 430 to continue to maintain the downward rotational force, the combustion air A may continuously rotate downwardly while approaching the inner wall 110 of the combustion chamber 100. However, when the large amount of combustion air is subsequently supplied, a portion of the combustion air A may be moved to the central portion or the upper portion of the combustion chamber 100 while the combustion air A rotates downwardly.

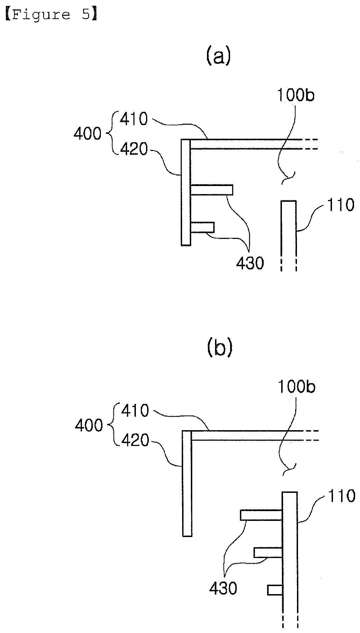

In order to prevent this, as an example, as illustrated in FIG. 5, the protruding guide lines 430 may be formed such that lengths of the respective protruding guide lines protruding laterally may be reduced downwardly in a longitudinal direction thereof.

Thus, in the process in which the downward rotation of the combustion air A is guided by the protruding guide lines 430, when the large amount of combustion air is subsequently supplied, a portion of the combustion air A that may be pushed to the central portion by the subsequently supplied combustion air may descend smoothly downwardly along the protruding guide lines 430. In this case, (a) of FIG. 5 is a view illustrating an example of the protruding guide lines 430 formed on the side guide plate 420 of the guide member 400, and (b) of FIG. 5 is a view illustrating another example of the protruding guide lines 430 formed on the inner wall 110 of the combustion chamber 100.

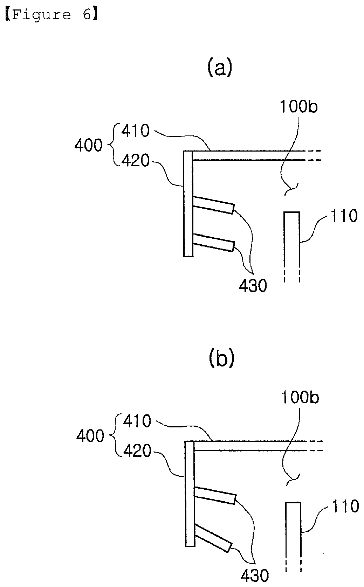

In addition, when formed on the side guide plate 420, which may be a surface facing the inner wall 110 of the combustion chamber 100 of the guide member 400, the protruding guide lines 430 may protrude to be slanted downwardly toward the inner wall 110 of the combustion chamber 100, as illustrated in FIG. 6, as another example.

Thus, in the process in which the downward rotation of the combustion air A is guided by the protruding guide lines 430, when the large amount of combustion air is subsequently supplied, the portion of the combustion air A that may be pushed to the central portion by the subsequently supplied combustion air may flow smoothly to a lower portion of the combustion chamber 100 by the protruding guide lines 430, protruding to be slanted downwardly toward the inner wall 110 of the combustion chamber 100. Of course, as described above, the protruding guide lines 430 slanted downwardly toward the inner wall 110 of the combustion chamber 100 may only be formed in the guide member 400, rather than the inner wall 110 of the combustion chamber 100, which may allow the combustion air A descending along a downwardly slanted surface of the protruding guide lines 430 to flow toward the inner wall 110 of the combustion chamber 100, rather than toward the central portion of the combustion chamber 100.

In addition, as another example, as illustrated in (b) of FIG. 6, the protruding guide lines 430 may have a structure in which downwardly slanted angles thereof, with respect to the inner wall 110 of the combustion chamber 100, increase in the longitudinal direction thereof, and thus the downward flow of the combustion air A by the above-mentioned protruding guide lines 430 may be implemented more smoothly.

Furthermore, although not illustrated in the drawings, according to the above-mentioned all structural limitations, the protruding guide lines 430 may also have a structure in which the length of each of the protruding guide lines 430 protruding laterally is reduced downwardly in the longitudinal direction thereof, the protruding guide lines 430 protrude to be slanted downwardly toward the inner wall 110 of the combustion chamber 100, and the downwardly slanted angles of the protruding guide lines 430, with respect to the inner wall 110 of the combustion chamber 100, are greater downwardly in the longitudinal direction thereof.

Meanwhile, although not illustrated in the drawings, the guide member 400 may be disposed such that a gap between the respective surfaces, which may face each other, of the guide member 400 and the inner wall 110 of the combustion chamber 100 may narrow in the longitudinal direction of the guide member 400 in the position of the inlet 100b of the combustion space 100a, in order to increase a flow velocity of the guided combustion air A.

Thus, when the flow velocity increases in the process in which the combustion air A is guided by the guide member 400, the maintaining of the downward rotational force of the combustion air A and the guide function performed by the guide member 400 and the protruding guide lines 430 may be performed more effectively.

The guide member 400 and the protruding guide lines 430 as described above may guide the combustion air A supplied to an inside of the combustion chamber 100 to rotate downwardly along the inner wall 110 of the combustion chamber 100, so that the combustion air A supplied to burn the fuel F may be preheated by a high-temperature atmosphere of the combustion chamber 100 or may be preheated by receiving heat from the inner wall 110 of the combustion chamber 100 maintained at high temperatures, thereby increasing combustion efficiency.

In addition, when heat is transferred to the combustion air A from the inner wall 110 of the combustion chamber 100 maintained at high temperatures, the inner wall 110 of the combustion chamber 100 may be cooled. Thus, a cooling effect of preventing internal structures from being damaged by heat at high temperatures may be obtained.

Meanwhile, the upper air supply portion 310 may be configured to supply 1.5 times to 4 times as much combustion air amount per hour as the lower air supply portion 320.

The combustion air A introduced into the combustion space 100a through the upper air supply portion 310 may rotate downwardly along the inner wall 110 of the combustion chamber 100 in the combustion space 100a, may reach a bottom of the combustion chamber 100, and may then move to the central portion of the combustion chamber 100, for use in burning the fuel F.

However, when the amount of combustion air supplied through the upper air supply portion 310 is 1.5 times less, per hour, than that of combustion air supplied through the lower air supply portion 320, the combustion air A supplied through the upper air supply portion 310 may not reach the bottom of the combustion chamber 100, so as not to be able to burn the fuel F seated on the bottom of the combustion chamber 100, thereby reducing combustion efficiency.

Conversely, when the amount of combustion air supplied through the upper air supply portion 310 is 1.5 times to 4 times greater, per hour, than that of combustion air supplied through the lower air supply portion 320, the combustion air A supplied through the upper air supply portion 310 may reach the bottom of the combustion chamber 100, so as to be used to burn the fuel F seated on the bottom of the combustion chamber 100, thereby increasing combustion efficiency.

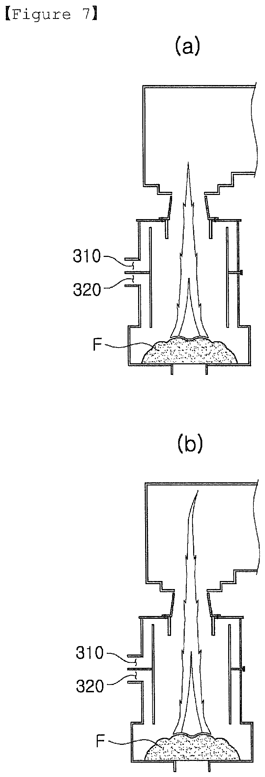

As an example, (a) of FIG. 7 is a view illustrating a case in which a ratio of a combustion air amount per hour supplied through the upper air supply portion 310 to a combustion air amount per hour supplied through the lower air supply portion 320 is 1:1, (b) of FIG. 7 is a view illustrating a case in which a ratio of a combustion air amount per hour supplied through the upper air supply portion 310 to a combustion air amount per hour supplied through the lower air supply portion 320 is 4:1, and as can be seen from a case in which a flame generated by burning fuel in a combustor illustrated in (b) of FIG. 7 extends far higher than a flame generated by burning fuel in a combustor illustrated in (a) of FIG. 7, combustion efficiency in (b) of FIG. 7 may be relatively excellent.

For example, when the amount of combustion air supplied through the upper air supply portion 310 is 4 times greater, per hour, than that of combustion air supplied through the lower air supply portion 320, the amount of combustion air per hour supplied through the lower air supply portion 320 may be excessively low, so that the amount of combustion air per hour directly supplied to the bottom of the combustion chamber 100 through the lower air supply portion 320 may be insufficient, thereby reducing combustion efficiency.

Ultimately, according to an exemplary embodiment in the present disclosure, the amount of combustion air supplied through the upper air supply portion 310 may be increased to be 1.5 times to 4 times greater than that of combustion air per hour supplied through the lower air supply portion 320, so that the combustion air A supplied through the upper air supply portion 310 may reach the bottom of the combustion chamber 100, thereby increasing combustion efficiency. In addition, the effects of preheating the combustion air A and cooling the inner wall 110 of the combustion chamber 100 may be increased.

In detail, the combustor, according to an exemplary embodiment, may further include a branching portion configured to supply a greater amount of combustion air to the upper air supply portion 310 per hour than to the lower air supply portion 320, as described above. The amount of combustion air supplied to the upper air supply portion 310 may be increased by the branching portion, thereby increasing the effects of preheating the combustion air A and cooling the inner wall 110 of the combustion chamber 100, while increasing combustion efficiency.

In detail, the branching portion may include a branch wall 341 for a branch flow of the combustion air A, disposed in an air supply line 330 connected, as one flow path, to the upper air supply portion 310 and the lower air supply portion 320. A pivoting bar 342 may be mounted on an end portion of the branch wall 341 to adjust the amount of combustion air flowing to each of the upper air supply portion 310 and the lower air supply portion 320. Although the structure is not illustrated in the drawings, the pivoting bar 342 may have a structure interlocked with a driving unit providing a driving force to the pivoting bar 342 such that the pivoting bar 342 may pivot.

As a result, according to an exemplary embodiment as described above, the guide member 400 and the protruding guide lines 430 may be configured to guide the combustion air A supplied to an inside of the combustion chamber 100 to rotate downwardly along the inner wall 110 of the combustion chamber 100, so that the combustion air A may be preheated before being burned with the fuel F, thereby increasing combustion efficiency, and that the inner wall 110 of the combustion chamber 100 maintained at high temperatures may be cooled, thereby allowing the combustor to be continuously operated, while increasing durability and service life of the combustion chamber 100.

While exemplary embodiments have been shown and described above, it will be apparent to those skilled in the art that modifications and variations could be made without departing from the scope of the present invention as defined by the appended claims.

## Claims

1. A combustor comprising:
a combustion chamber including a grate embedded therein and a combustion space formed above the grate;
a fuel supply portion downwardly connected to a central portion of the grate to supply fuel to an upper portion of the grate;
an air supply part connected to a side portion of the combustion chamber to be slanted on a horizontal plane, and supplying combustion air such that the combustion air rotates in the combustion space;
a guide member disposed to protrude toward an inside of the combustion space from an inlet through which the combustion air flows into the combustion space, and opened downwardly so as to guide the combustion air such that the combustion air, supplied by the air supply part, rotates downwardly along an inner wall of the combustion chamber in the combustion space; and
protruding guide lines having a screw line shape and extending to be slanted downwardly on at least one of respective surfaces, which face each other, of the guide member and the inner wall of the combustion chamber.

2. The combustor of claim 1, wherein lengths of the respective protruding guide lines protruding laterally are reduced downwardly in a longitudinal direction thereof.

3. The combustor of claim 1, wherein the protruding guide lines are formed on a surface of the guide member that faces the inner wall of the combustion chamber, and protrude to be slanted downwardly toward the inner wall of the combustion chamber.

4. The combustor of claim 3, wherein downwardly slanted angles of the respective protruding guide lines, with respect to the inner wall of the combustion chamber, are greater downwardly in a longitudinal direction thereof.

5. The combustor of claim 1, wherein the guide member is disposed such that a gap between respective surfaces of the guide member and the inner wall of the combustion chamber that face each other narrows in a longitudinal direction of the guide member in a position of the inlet of the combustion space, in order to increase a flow velocity of guided combustion air.

6. The combustor of claim 1, wherein the guide member includes:
an upper guide plate extending from an upper structure of the inlet in the combustion chamber, inwardly of the combustion chamber; and
a side guide plate extending downwardly from the upper guide plate and spaced apart from the inner wall of the combustion chamber.

7. The combustor of claim 1, wherein the air supply part includes:
an upper air supply portion connected to an upper side portion of the combustion chamber to supply the combustion air such that the combustion air rotates downwardly in the combustion space; and
a lower air supply portion connected to a lower side portion of the combustion chamber to supply the combustion air such that the combustion air is in contact with the fuel on an upper portion of the grate to be burned and then rises along a central portion of the combustion chamber.

8. The combustor of claim 7, wherein the upper air supply portion supplies 1.5 times to 4 times as much combustion air amount per hour as the lower air supply portion.

9. The combustor of claim 1, wherein the air supply part is connected to an outer wall of the combustion chamber, spaced apart from the inner wall while surrounding the inner wall, such that the combustion air rotates along an external surface of the inner wall of the combustion chamber and is then introduced into the combustion space through the inlet.

10. The combustor of claim 1, wherein the grate is rotationally driven around the fuel supply portion.

11. The combustor of claim 1, wherein the fuel supply portion passes through the grate to protrude into the combustion space, and is configured to have a screw form to continuously supply the fuel.

12. The combustor of claim 1, wherein the fuel supply portion passes through the grate to protrude into the combustion space, and is provided with a blocking member, having a downwardly enlarged diameter and mounted on an end portion of the fuel supply portion, adjacent to the combustion space, to distribute the fuel laterally while blocking an upward movement of the fuel.

13. The combustor of claim 1, wherein the combustion chamber has a frustoconical shape, in which an upper portion is relatively narrow and a lower portion is relatively wide.
